Europäisches Patentamt

European Patent Office

Office européen des brevets

(11) Veröffentlichungsnummer: **0 279 918**
**A2**

(12) # EUROPÄISCHE PATENTANMELDUNG

(21) Anmeldenummer: 87117438.9

(22) Anmeldetag: 26.11.87

(51) Int. Cl.⁴: **G01D 3/02** , F02D 41/08 , H01C 10/04

(30) Priorität: 25.02.87 DE 3705969

(43) Veröffentlichungstag der Anmeldung:
31.08.88 Patentblatt 88/35

(84) Benannte Vertragsstaaten:
DE FR GB IT

(71) Anmelder: **PIERBURG GMBH**
**Leuschstrasse 1**
**D-4040 Neuss 1(DE)**

(72) Erfinder: **Jordan, Wolfgang, Dr.**
**Neissestrasse 73**
**D-4048 Grevenbroich 5(DE)**
Erfinder: **Stoffels, Friedhelm**
**Müggenburgstrasse 42**
**D-4040 Neuss 21(DE)**

(54) **Dreh- oder Schiebeschalter.**

(57) Diese werden für die Stellungserfassung von Stellgliedern eingesetzt, wobei bekannte Schalter für jede Schalterfunktion eine Leiterbahn und einen Schieber aufweisen.

Der erfindungsgemäße Dreh-oder Schiebeschalter weist zwei parallele Leiterbahnen (1,2) auf, die von einem Schleifer (4) überbrückt werden und elektrisch nicht leitende Leiterbahnunterbrechungen (14,16) aufweisen.

Hierdurch ist aus Schaltsignalen zwischen mit den Leitungsbahnen 1,2 verbundenen Kabelanschlüssen(10,11,12,13) eindeutig der Stellungsbereich, beispielsweise einer Drosselklappe einer Brennkraftmaschine, bestimmbar.

FIG.1

EP 0 279 918 A2

## Dreh-oder Schiebeschalter

Die Erfindung betrifft einen Dreh-oder Schiebeschalter für die Stellungserfassung von Stellgliedern, insbesondere für die Leistungssteuerung von Brennkraftmaschinen nach dem Oberbegriff des Patentanspruchs.

Allgemein sind Drosselklappenschalter im Zusammenhang mit Vergasern oder Einspritzeinrichtungen von Brennkraftmaschinen bekannt, bei denen beispielsweise die Leerlaufdrehzahl geregelt sein kann. Wird durch Öffnen der Drosselklappe die Drehzahl erhöht, versucht das Steuergerät auf Soll-Drehzahl zu regeln, d.h. der Steller läuft bis zur elektrisch begrenzten Endlage "zu". Dies muß jedoch verhindert werden, da sonst beim Schließen der Drosselklappe und gleichzeitiger Zuschaltung von Zusatzbelastungen (Automatikgetriebe, Klimaanlage, Lenkhilfe) die Drehzahl vorübergehend stark abfallen würde. Ein Signal des Drosselklappenschalters bewirkt deshalb bei geöffneter Drosselklappe eine Vergrößerung des minimalen Öffnungsquerschnitts am Steller. Dadurch beginnt der Einregelvorgang mit geöffnetem Steller, wodurch ein Drehzahleinbruch vermieden wird. Hierbei kann der Drosselklappenschalter durch Mikroschalter gebildet sein, die von einer Schalterkulisse betätigt werden.

Der Drosselklappenschalter wird durch die Drosselklappenwelle oder einen Sollwertgeber für die Drosselklappe betätigt und schließt in den Endstellungen Vollast und Leerlauf jeweils einen Kontakt.

Aus der DE-PS 23 24 115 (C2) ist eine Vorrichtung zum Steuern der Kraftstoffversorgung einer Brennkraftmaschine bekannt, bei der ein Arm eines Drosselklappenstellers eine Vielzahl von Schleifern trägt, die auf jeweils einer Leiterbahn aufliegen und Kontakte herstellen zur Bildung eines digitalen Eingangssignals für die Kraftstoffversorgungseinrichtung. Hierbei weisen die Leiterbahnen gemäß einem Verschlüsselungs-Code nicht leitende Unterbrechungen auf.

Hiervon ausgehend stellt sich die Aufgabe, die bekannten, aus Mikroschaltern gebildeten Drosselklappenschalter - die durch eine Vielzahl von zwischengeschalteten Übertragungs-und Betätigungsgliedern ungenau und schwer zu justierende Schaltpunkte aufweisen, zu ersetzen und durch einen in Anlehnung an den Gegenstand der DE-PS 23 24 115 ausgebildeten Dreh-oder Schiebeschalter, der jedoch in einfachster Ausführung und nach Möglichkeit in Filmtechnik hergestellt werden kann.

Diese Aufgabe ist durch die gekennzeichneten Merkmale des Patentanspruchs bei einem gattungsgemäßen Dreh-oder Schiebeschalter gelöst.

Vorteilhaft sind dabei der Entfall von Übertragungsgliedern, da der Schleifer direkt an einer Welle des Stellgliedes angeordnet sein kann, und die erreichbare konstruktive Vereinfachung.

Ein Ausführungsbeispiel der Erfindung ist - schematisch in der Zeichnung dargestellt und im folgenden beschrieben.

Es zeigt:

Fig. 1 eine Leiterbahn - Schleiferanordnung,

Fig. 2 ein Schaltdiagramm über dem Stellerweg.

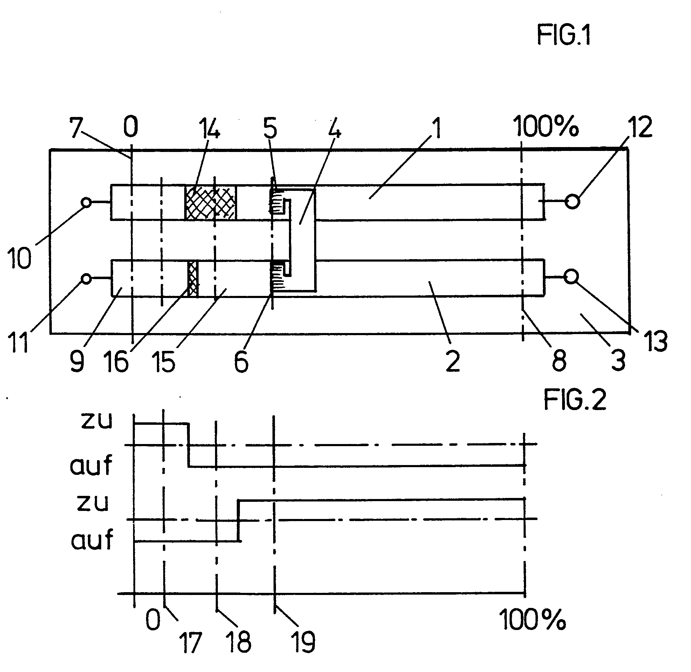

Fig. 1 zeigt zwei Leiterbahnen 1,2, die auf einer Leiterplatte 3 unmittelbar angeordnet sind und einen Schleifer 4 mit zwei Bürsten 5,6, die auf den Leiterbahnen 1,2 aufliegen. Der Schleifer 4 ist mit einem nicht dargestellten Stellglied, beispielsweise einem Drosselklappensteller einer Brennkraftmaschine, gekoppelt und in Abhängigkeit von der Stellung des Stellgliedes zwischen 0 - und 100 % - Marken 7,8 auf den Leiterbahnen 1,2 - positioniert. Endabschnitte 9 der Leiterbahnen 1,2 weisen Kabelanschlüsse 10, 11,12,13 auf, wobei die Kabel beispielsweise zu einem elektrischen Steuergerät führen können. Leiterbahn 1 weist einen zwischen einem mit Anschluß 10 verbundenen Leitungsteil und einem mit Anschluß 12 verbundenen Leitungsteil liegenden nichtleitenden Abschnitt 14 auf. Leiterbahn 2 ist im Komplementär-Abschnitt 15 zum nichtleitenden Abschnitt 14 der Leiterbahn 1 durch einen Spalt 16 elektrisch getrennt, der etwas breiter als die Bürstenbreite ist.

Aus Fig. 2 ist für das gewählte Ausführungsbeispiel die Schaltfunktion entnehmbar, die sich ergibt, wenn der Schleifer 4 infolge der Stellgliedbewegung über die Leiterbahn 1,2 bewegt wird, und zwar sind in den durch -. Linien 17,18,19 markierten Stellungen

a) Anschlüsse 10 und 11 über den Schleifer 4 verbunden und Anschlüsse 12 und 13 nicht verbunden,

b) Anschlüsse 10 und 11 sowie 12 und 13 nicht verbunden und

c) Anschlüsse 10 und 11 nicht verbunden und Anschlüsse 12 und 13 verbunden.

Es ist somit eine eindeutige Aussage aus den vorliegenden Schaltungsarten abzuleiten, in welchem Leiterbahnabschnitt bzw. in welcher Stellung Schleifer 4 bzw. Stellglied sich befindet.

Das Ausführungsbeispiel ist als Schiebeschalter dargestellt worden, auf eine Darstellung als Drehschalter kann der Vorstellbarkeit wegen verzichtet werden.

**Ansprüche**

1. Dreh-oder Schiebeschalter für die Stellungserfassung von Stellgliedern, insbesondere für die Leistungssteuerung von Brennkraftmaschinen,bestehend aus Leiterbahnen und Schleifer, dadurch gekennzeichnet, daß zwei parallele Leiterbahnen (1,2) von einem mit dem Stellglied bewegten Schleifer (4) überbrückt werden und elektrisch nicht leitende Leiterbahnunterbrechungen (14,16) aufweisen, die so angeordnet sind, daß zwischen den an den Enden (9) der Leiterbahnen (1,2) angeschlossenen elektrischen Kabelanschlüssen (10,11,12,13) entweder nur die ersten Anschlüsse (10,11), keine der Anschlüsse (10,11,12,13) oder nur die letzten Anschlüsse (12,13) der Leiterbahnen (1,2) über den Stellweg des Schleifers (4) miteinander verbunden sind.

2. Dreh-oder Schiebeschalter nach Anspruch 1, dadurch gekennzeichnet, daß die Leiterbahnunterbrechungen (14,16) gleiche oder ungleiche Längen aufweisen und dadurch verschiedene Schaltwege bzw. -winkel bestimmt sind.

FIG.1

7  0  14  5  4  1  100%  12

10

11

9  16  15  6  2  8  3  13

FIG.2

zu

auf

zu

auf

0  100%

17  18  19